# EUROPEAN PATENT SPECIFICATION

(11) **EP 1 103 783 B1**
(45) Date of publication and mention of the grant of the patent: **23.07.2003**
(21) Application number: 00124723.8
(22) Date of filing: 13.11.2000
(51) Int. Cl.: G01B 11/06, G01B 15/02

(54) **Equipment and method for measuring the basic weight and thickness of the materials in films, ribbons and the like, while simultaneously inspecting their surface**
Vorrichtung und Verfahren zur Messung des Flächengewichts und der Dicke von Materialien in Filmen, Bändern oder ähnlichem, unter gleichzeitiger Inspektion von deren Oberfläche
Dispositif et méthode pour mesurer la masse surfacique et l'épaisseur des materiaux dans des films, des rubans et cetera, en inspectant simultanément leur surface

(30) Priority: 19.11.1999 IT MI992429
(43) Date of publication of application: 30.05.2001
(73) Proprietor: ELECTRONIC SYSTEMS S.P.A., 28015 Momo (NO) (IT)
(72) Inventor: Chiodini, Sergio, Frazione Castellazzo de Barzi, 20087 Robecco sul Naviglio (MI) (IT); Traficante, Francesco, 21052 Busto Arsizio (VA) (IT)
(74) Representative: Savi, Alberto

(56) References cited:
- EP-A- 0 822 388
- DE-A- 4 325 590
- DE-A- 19 830 323
- US-A- 4 720 808
- US-A- 4 885 709
- US-A- 5 118 940
- US-A- 5 715 051

## Description

The object of this invention is an equipment and a method for measuring the thickness or basic weight of the materials in films or ribbons, in particular of non-woven fabrics, while simultaneously inspecting their surface.

The patent application MI 96 A 001610 (EP-A-0 822 388) of the same Applicant describes an equipment and a method for measuring the cross profile of the basic weight or thickness of the materials in a moving film or ribbon.

In detail, this previous art provides for performing a continuous measurement of the ribbon, in a direction crosswise to the direction of motion of the ribbon, while using sources some of β-ray emission, arranged at one side of the ribbon's passing space and capable of irradiating a plane comprised between two parallel lines perpendicular to the direction of motion of the ribbon and a multiple number of static β-sensors set up on the opposite side of the ribbon's passing space, so as to pick up the radiation emitted or diffused through the moving ribbon's irradiated portion.

Moreover, this previous art provides for the presence of a scanning head, also based on β-rays, whose function is merely that of periodically calibrating the β-ray sensors.

The measuring system described in the application Ml 96 A001610 (EP-A-0 822 388) allows reconstructing the material's cross-sectional profile in a shorter time than by a scanning-type measurement.

Moreover, it allows discriminating between the transversal and longitudinal defects, and therefore a more accurate and speedier regulation of the film material's production process.

On the other hand, the previous art described above presents a number of other problems and drawbacks.

Considering the fact that a proper control of the thickness or basic weight of the material requires a minimum space resolution of a few millimeters and that the materials in films, such as non-woven fabrics are produced in lengths in the order of a few meters, it follows that the production of an equipment such as that described by the patent Ml 96 A 001610 (EP-A-0 822 388) demands employing hundreds of β-ray sensors.

The large number of β-ray sensors and the high space resolution needed for these sensors greatly affects the production costs of these equipment items.

On the other hand, the usage of such a large number of sensors also involves considerable designing and manufacturing complications.

In particular, this means considering the problems of mechanically aligning the sensors, managing the data communication and transfer systems, the design and production of the electronics for generating the signals originating from the the sensors themselves, and for the processing of the data.

Moreover, even where β-ray sensors are employed, a shadow area is left over between adjacent sensors, which amounts to a considerable percentage when the space resolution of the sensors is of only a few millimeters.

A further drawback of the equipment and method described in the patent application Ml 96 A 00 1610 (EP-A-0 822 388) is that not all the production defects are measurable, but only those related to a change in the basic weight or thickness.

It is in fact impossible to measure the defects originating from the changes in the color hues, the presence of surface impurities, cuts, abrasions or other damages.

DE 4 325 590 A1 discloses an apparatus for measuring contactless and continuously the thickness profile of a layer in a film, whereas US A 4 720 808 discloses a method for continuous contactless measurement of the basic weight profile.

The purpose of this invention is therefore to find a solution for at least part of the mentioned problems.

This purpose is achieved by an equipment according to claim 1, and a method according to claim 2.

Further embodiments of the equipment and possible forms of execution may be produced in accordance with the dependent claim.

The reader expert in the trade will instantly grasp the advantages gained by this equipment, in particular for reconstructing the cross profile of the thickness or basic weight, and for visually and in real time inspecting the surface status of the material with a high space definition.

An immediate consequence of the application of this invention on plants for the production of the materials described above is the resulting reduction of the time periods needed for regulating the process and of the wastage of material. In effect, this invention makes it possible to achieve optimum production conditions within an extremely short period.

A possible embodiment of the apparatus and method as an object of this invention shall now be described with reference to the enclosed drawings, in which:
Fig. 1 shows a simplified view of a possible embodiment of the equipment,

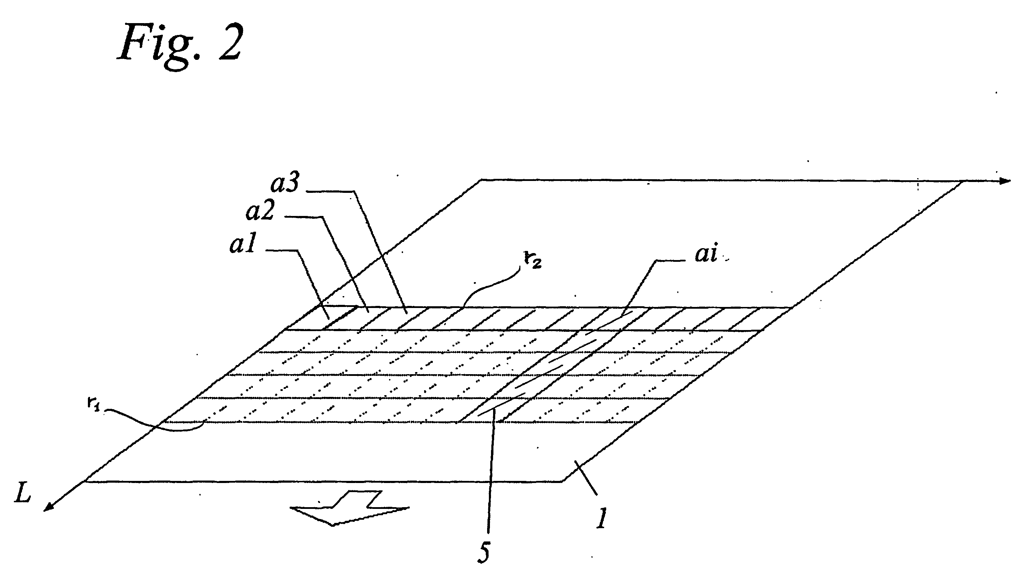

Fig. 2 shows a portion of the film under measurement, while evidencing the subdivision of the basic reading areas,

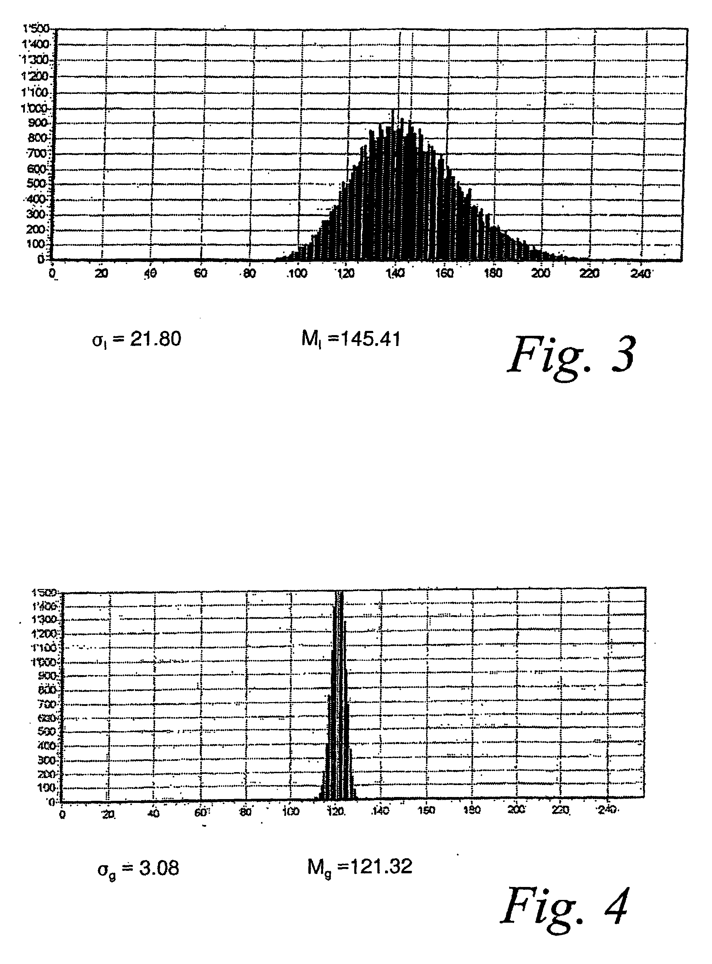

Fig. 3 shows an example of the statistical distribution of the areas of gray - from 0 to 255 - measured on the film at the point of a basic reading area of the continuous reading device used for a given time period,
Fig. 4 shows the statistical distribution of the values of thickness or basic weight - in g/m² measured opposite the scanning measuring unit - on the same longitudinal length of film on which the measurement in Fig. 3 was performed.
Fig. 5 shows a possible calibrating curve for each basic brightness reading area, which relates the radiation intensity to the value of basic weight or thickness.

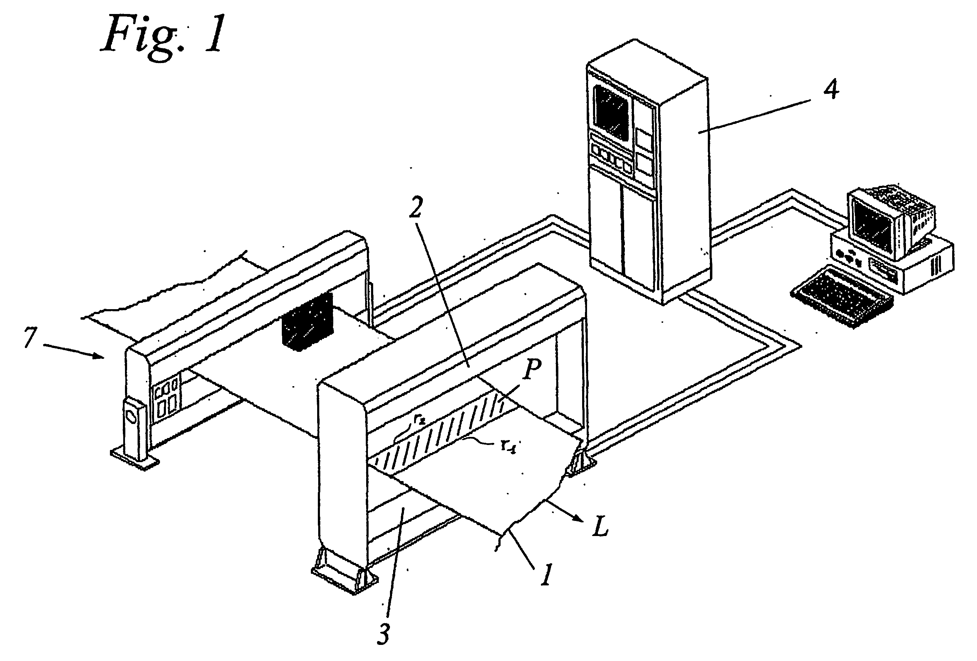

Fig. 1 illustrates an equipment for the continuous contact-free measurement of the basic weight or thickness profile of a material in Film 1 moving in a direction L.

This equipment includes some devices 2, capable of irradiating a plane P comprised between two parallel straight lines r₁, r₂ and some devices 3 capable of cyclically revealing the intensity of the radiation crossing the basic areas a₁, a₂, a₃ ... aₙ of said plane P comprised between the two parallel straight lines r₁, r₂, while the basic areas a₁, a₂, a₃ ... aₙ are lined up in parallel with the two parallel straight lines r₁, r₂.

The devices 2 capable of irradiating and the devices 3 capable of revealing the intensity of the radiation are arranged so as to define a space capable of allowing the passage, in the plane P comprised between said two parallel straight lines r₁, r₂ of the film moving in a direction perpendicular to said two parallel straight lines, so that the intensity of the radiation transmitted through each individual basic area a₁, a₂, a₃ ... aₙ depends on the thickness (or basic weight) of the portion of the material in the film 1 that crosses the plane P.

The equipment also comprises devices 4 capable of processing the signal of the intensity cyclically measured at each individual basic area a₁, a₂, a₃ ... aₙ, so as to obtain a representative image of the surface status of the material under production, and of the eventual presence of any surface defects of the film material crossing each individual basic area a₁, a₂, a₃ ... aₙ.

One characteristic of the equipment is the fact that the devices 2 emit a visible radiation and that the devices 3 capable of measuring the intensity of the radiation transmitted through each individual area a; are constituted by a linear solid-state telecamera 3, for instance of a CCD or TDI type.

This characteristic allows containing the equipment's costs while still providing a high space resolution, and has proved to be particularly advantageous in measuring the thickness or basic weight of the non-woven fabric.

In a possible and preferred embodiment, one or more linear telecameras are set up along a direction perpendicular to the direction of motion of the material in the film, so that the the ratio between the total number of pixels and the width of the material is less than the desired value of the space resolution; if the desired space resolution is 2.0 mm on a material having a width of 200 cm, it is necessary to employ a number of linear telecameras (and an appropriate optic system) so that the total number of pixels equals or exceeds 1000.

The brightness of each pixel is generally defined by 2⁸ levels of gray.

A possible embodiment envisions some linear telecameras sensitive to visible radiation (a range of wave length between about 400 nm and about 800 nm) at 1024 pixels, with a scanning time between 20 e 50 µsec per line.

After appropriately sizing the optics so that the linear telecameras (or telecamera) fully inspect the cross section of the material while assuming a forward moving speed of the material of 240 m/min (4 m/s), a sectional width of 200 cm and a scanning time of 40 µs per line, one obtains a sizing of the basic areas a₁, a₂, a₃, ..., aₙ of 2.0 x 0.16 mm², with a transversal resolution of 2.0 mm and a longitudinal resolution of 0.16 mm.

It is understood that if one prefers increasing the individual reading areas, the pixels of the linear telecamera may be gathered together in groups.

Despite the fact that the preferred embodiment uses linear telecameras, an expert in the technical field will not find it difficult to grasp that the linear telecameras may be substituted by matrix-type telecameras.

It is understood that if one prefers increasing the size of the individual reading areas, the pixels of the linear telecamera may be gathered together in groups.

While the preferred embodiment employs linear telecameras, an expert in the technical field will have no difficulty in grasping that the linear telecameras may be substituted by matrix-type cameras.

It is evident that an expert will not find it difficult to grasp that such an equipment may not merely be employed on non-woven fabric but also on materials of a different kind, provided they're capable of transmitting radiation.

The equipment preferably includes some devices for processing the signals referring to the intensity cyclically measured at each individual basic area a₁, a₂, a₃ ... aₙ, so as to obtain an image of a portion of one of the two sides of the film.

This characteristic advantageously allows performing a detailed inspection of the surface status of the material, while at the same time measuring its basic weight or thickness.

In its preferred embodiment the equipment includes some devices 6 (not shown here) capable of defining a calibration curve relating the values of the radiation intensity crossing each individual basic area a₁, a₂, a₃ ... aₙ to a value of basic weight or thickness, as will be better clarified later on. The scanning measurement performs a periodical calibration of the calibrating curve of each individual basic area a;.

The periodical standardization of the calibrating curves allows eliminating the errors due to the non-uniform distribution of the radiating intensity or to changes of the radiating intensity in time, as well as the errors due to any changes in the chemical-physical characteristics of the basic compound, the type of production process, and the color of the material in the film.

In order to perform this periodical calibration, the equipment includes a scanning head 7 which is capable of effecting a direct measurement of the basic weight (or thickness) of the material in the film 1, and of geometrically aligning itself with each individual basic area a₁, a₂, a₃ ... aₙ, along the direction of the forward motion of the material 1 in the film 1.

The type of the scanning head 7 depends on the material measured; for a non-woven fabric, for example, it will preferably be of a type based on β-rays. Before performing the measurement, the scanning system must be calibrated. The scanning system's calibrating operations are generally performed in the laboratory or on the operating equipment, while using a series of samples of reference material of different thickness.

The devices 6 are capable of calculating the average Mₗ and the variance σₗ of the values of radiating intensity (in terms of levels of gray) measured on a sample section opposite a single basic area aᵢ, and of calculating the average M_{g} and the variance σ_{g} of the values of the basic weight on the same sample section S when the same passes under the basic weight or thickness measuring device.

The knowledge of these statistical variables allows constructing the calibration curve that relates the value of the radiation intensity measured at each basic area a; with the value of the basic weight or thickness of the material in the film.

The curve calculated in this manner is valid in a well defined neighbourhood of the operating point, whenever there is a significant change in the average thickness (or basic weight) value of the material to be produced, and it is essential to recalibrate the calibration curves of each individual basic area aᵢ.

The operation of the equipment is as follows: the moving material of the film 1 is lighted in the plane P comprised between the two straight lines r₁, r₂ perpendicular to the forward direction of motion L of the material in the film 1. On a cyclical basis, the intensity of the radiation transmitted through the basic reading areas a₁, a₂, a₃... aₙ is measured, and said value is used to obtain a representative information about the basic weight or thickness at each individual basic area a₁, a₂, a₃ ... aₙ.

For this purpose each individual basic area a₁, a₂, a₃ ... aₙ is associated with a calibration curve which allows obtaining the ratio between the radiating intensity and the basic weight or thickness.

Moreover, the values of gray cyclically measured by the linear telecamera are processed to obtain the image of one of the two sides of the material in film 1.

The periodical reconstruction of the calibration curve of each individual basic area a₁, a₂, a₃ ... aₙ provides for a sequence of measurements of the radiating intensity at each individual basic reading area aᵢ for a time period T not exceeding the minimum necessary to allow the ribbon to move forward by a length equal to the distance between the individual reading area a; and the reading area of the scanning head 7.

In the following, the scanning head 7 geometrically aligned with the reading area aᵢ performs a series of measurements of the basic weight for thickness on the same sample section S of the film which has previously been subjected to the measurement of the radiating intensity.

These measurements then allow obtaining the averages and variances according to the following formulas:

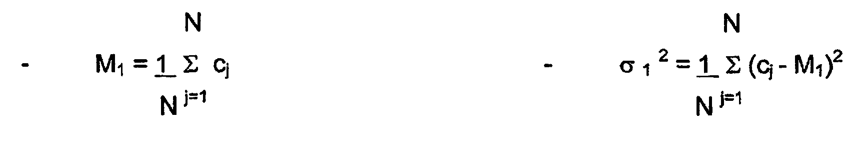

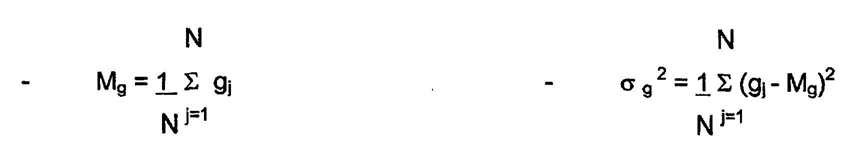

Where N = number of the basic reading areas,
cj = brightness in terms of levels of gray measured at the basic area j.
gj = basic weight measured at the basic area j.

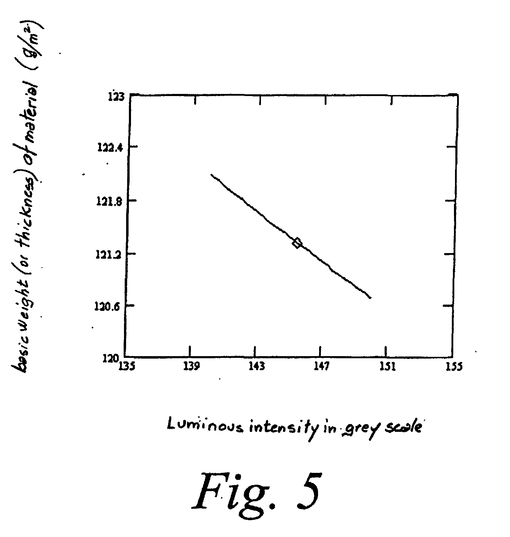

These statistical variables then allow defining the calibration curve; in a preferred embodiment, the calibration curve is constituted of a straight line crossing the point (Mₗ, M_{g}) and having an angular coefficient defined by the ratio σ_{g}/σₗ as can be seen from Fig. 5.

## Claims

1. An equipment to measure, continuously and with no direct contact, the basic weight or thickness profile of a material in a film or ribbon, while said material is moving, the equipment comprising:
irradiating devices (2) capable of irradiating a region on said material in a plane (P) comprised between two parallel straight lines (r₁, r₂),
measuring devices (3) capable of cyclically measuring the intensity of radiation transmitted through basic areas (a₁, a₂, a₃, ..., aₙ) of said region in said plane (P) comprised between said two parallel straight lines (r₁, r₂) where said basic areas (a₁, a₂, a₃, ..., aₙ) are geometrically aligned in parallel with said two parallel straight lines (r₁, r₂), said measuring devices (3) being constituted of a linear telecamera (3) or of a matrix type camera,
wherein said irradiating devices (2) and said measuring devices (3) are arranged in such a manner as to define a space capable of allowing the motion, in said region of said plane comprised between said two parallel straight lines, of said material in a direction perpendicular to that of the two parallel straight lines (r₁, r₂), so that the intensity of the radiation transmitted through each individual basic area (aᵢ) is a function of the basic weight or thickness of the material,
devices (4) capable of processing the signal of the intensity of radiation cyclically measured at each individual basic area (aᵢ) so as to obtain an information representative of the basic weight or thickness of the material which crosses each individual basic area (aᵢ),
calibrating devices (6) capable of defining a calibration curve correlating the measurement of the of the radiation intensity measured in each individual basic area (aᵢ) to a value of basic weight or thickness,
said calibrating devices (6) comprising a scanning head (7) capable of geometrically aligning itself, depending on the direction of motion of the material, with each individual basic area (aᵢ) and capable of performing a sequence of measurements of the basic weight or thickness on the length of material previously subjected to the measurement of the radiating intensity,
**characterised in that** said calibration devices (6) are capable of calculating the average (Mₗ) and the variance (σₗ) of the values of the intensity of the radiation, capable of calculating the average (M_{g}) and the variance (σ_{g}) of the values of basic weight or thickness, and capable of obtaining the calibration curve as a function of said averages (Mₗ, M_{g}) and said variances (σₗ, σ_{g}).

2. A method for the continuous and contactless measurement of the basic weight or thickness profile of a material in a film or ribbon, in particular of a non-woven fabric, while said material is moving, the method comprising the steps of:
irradiating a region on said material in a plane (P) comprised between two parallel straight lines (r₁, r₂) perpendicular to the direction of motion of the material,
cyclically measuring the intensity of the radiation transmitted through basic areas (a₁, a₂, a₃, ..., aₙ) of said region in said plane (P) lined up in parallel with said two parallel straight lines (r₁, r₂),
processing the information on the transmitted radiation intensity of each individual basic area (aᵢ) and obtaining an information representative of the basic weight or thickness at each individual basic area (aᵢ) as a function of a calibration curve of each individual basic area (aᵢ),
wherein the reconstruction of the calibration curve of each individual basic area (aᵢ) includes the steps of:
geometrically aligning a scanning head (7) by itself, depending on the direction of motion of the material, with each individual basic area (aᵢ), performing a sequence of measurements at each individual basic area (aᵢ) for a time (T) not exceeding that necessary for the material to move forward by a length equal to the distance between the individual basic area (aᵢ) and the reading area of the scanning head (7), and
performing with the scanning head (7) a sequence of measurements of the basic weight or thickness on the length of material previously subjected to the measurement of the radiating intensity,
**characterised in that** the reconstruction of the calibration curve further comprises the steps of:
calculating the average (Mₗ) and the variance (σₗ) of the values of the intensity of the radiation, calculating the average (M_{g}) and the variance (σ_{g}) of the values of basic weight or thickness, and obtaining the calibration curve as a function of said averages (Mₗ, M_{g}) and said variances (σₗ, σ_{g}).

3. A method according to claim 2, **characterised in that** said calibration curve is a straight line passing through the point of coordinates (Mₗ, M_{g}) defined by the average (Mₗ) of the radiation intensity and the average of basic weight or thickness (M_{g}), the straight line having an angular coefficient defined by the ratio (σ_{g}/σₗ) of the variance (σ_{g}) of the basic weight or thickness and the variance of (σₗ) of the intensity.

## Patentansprüche

1. Gerät zum kontinuierlichen und berührungslosen Messen der Flächenmasse bzw. des Flächengewichts oder des Dickeprofils eines Materials in einem Film oder Band, während sich das Material bewegt, wobei das Gerät aufweist:
Bestrahlungsvorrichtungen (2), welche einen Bereich auf dem Material in einer Ebene (P) bestrahlen können, die zwischen zwei parallelen geraden Linien (r₁, r₂) enthalten ist;
Messvorrichtungen (3), welche die Intensität von Strahlung zyklisch messen können, die durch Basisflächen (a₁, a₂, a₃, ..., aₙ) des Bereichs in der Ebene (P) transmittiert wird, die zwischen den beiden parallelen geraden Linien (r₁, r₂) enthalten ist, an denen die Basisflächen (a₁, a₂, a₃, ..., aₙ) parallel mit den beiden parallelen geraden Linien (r₁, r₂) geometrisch ausgerichtet sind, wobei die Messvorrichtungen (3) aus einer linearen Telekamera (3) oder einer Matrix-Kamera bestehen;
wobei die Bestrahlungsvorrichtungen (2) und die Messvorrichtungen (3) derart angeordnet sind, dass sie in dem Bereich der zwischen den beiden parallelen geraden Linien enthaltenen Ebene eine Raum bestimmen, der die Bewegung des Materials in einer Richtung senkrecht zu derjenigen der beiden parallelen geraden Linien (r₁, r₂) ermöglicht, so dass die Intensität der durch jede einzelne Basisfläche (aᵢ) transmittierten Strahlung eine Funktion der Flächenmasse bzw. des Flächengewichts oder der Dicke des Materials ist;
Vorrichtungen (4), welche das Signal der bei jeder einzelnen Basisfläche (aᵢ) zyklisch gemessenen Strahlung verarbeiten kann, um Information zu erhalten, die für das Flächengewicht oder die Dicke des Materials, das jede einzelne Basisfläche (aᵢ) kreuzt, repräsentativ ist;
Kalibriervorrichtungen (6), welche eine Kalibrationskurve bestimmen können, welche die Messung der in jeder einzelnen Basisfläche (aᵢ) gemessenen Strahlung mit einem Wert des Flächengewichts oder der Dicke korellieren;
wobei die Kalibriervorrichtungen (6) einen Abtastkopf (7) aufweisen, der in der Lage ist, sich je nach der Bewegungsrichtung des Materials mit jeder einzelnen Basisfläche (aᵢ) selbst geometrisch auszurichten, und in der Lage ist, eine Sequenz von Messungen des Flächengewichts oder der Dicke an einer Länge des Materials durchzuführen, an dem zuvor die Messung der Strahlungsintensität durchgeführt wurde,
**dadurch gekennzeichnet, dass** die Kalibriervorrichtungen (6) in der Lage sind, den Mittelwert (Mᵢ) und die Varianz (σ_{I}) der Werte der Intensität der Strahlung zu berechnen, sowie in der Lage sind, den Mittelwert (M_{g}) und die Varianz (σ_{g}) der Werte der Flächenmasse oder der Dicke zu berechnen, sowie in der Lage sind, die Kalibrationskurve als Funktion der Mittelwerte (M_{I}, M_{g}) und der Varianzen (σ_{I}, σ_{g}) zu erhalten.

2. Verfahren zur kontinuierlichen und berührungslosen Messung der Flächenmasse oder des Dickeprofils eines Materials in einem Film oder Band insbesondere bei einem nicht-gewebten Stoff, während sich das Material bewegt, wobei das Verfahren die folgenden Schritte aufweist:
Bestrahlen eines Bereichs auf dem Material in einer Ebene (P), die zwischen zwei parallelen geraden Linien (r₁, r₂) enthalten ist, die senkrecht zur Bewegungsrichtung des Materials ausgerichtet sind;
zyklisches Messen der Intensität der Strahlung, welche durch die Basisflächen (a₁, a₂, a₃, ..., aₙ) des Bereichs in der Ebene (P) transmittiert wird, der mit den beiden parallelen geraden Linien (r₁, r₂) parallel ausgerichtet ist;
Verarbeiten der Information der Intensität der transmittierten Strahlung jeder einzelnen Basisfläche (aᵢ) und Gewinnen von Information, die für das Flächengewicht oder die Dicke bei jeder einzelnen Basisfläche (aᵢ) repräsentativ ist, als Funktion einer Kalibrationskurve jeder einzelnen Basisfläche (aᵢ);
wobei die Wiederherstellung der Kalibrationskurve jeder einzelnen Basisfläche (aᵢ) die folgenden Schritte enthält:
eigenständiges geometrisches Ausrichten eines Abtastkopfes (7) je nach der Bewegungsrichtung des Materials mit jeder einzelnen Basisfläche (aᵢ); Durchführen einer Sequenz von Messungen bei jeder individuellen Basisfläche (aᵢ) während einer Zeit (T), welche diejenige nicht überschreitet, die notwendig ist, damit sich das Material um eine Länge vorwärts bewegt, die gleich groß ist wie die Entfernung zwischen der einzelnen Basisfläche (aᵢ) und der Lesefläche des Abtastkopfs (7); und mit dem Abtastkopf (7) Durchführen einer Sequenz von Messungen des Flächengewichts oder der Dicke an der Materiallänge, an der zuvor die Messung der Strahlungsintensität durchgeführt wurde,
**dadurch gekennzeichnet, dass** die Wiederherstellung der Kalibrationskurve außerdem die folgenden Schritte aufweist:
Berechnen des Mittelwerts (M_{I}) und der Varianz (σ_{I}) der Werte der Intensität der Strahlung; Berechnen des Mittelwerts (M_{g}) und der Varianz (σ_{g}) der Werte des Flächengewichts oder der Dicke; und Gewinnen der Kalibrationskurve als Funktion der Mittelwerte (M_{I}, M_{g}) und der Varianzen (σ_{I}, σ_{g}).

3. Verfahren nach Anspruch 2, **dadurch gekennzeichnet, dass** die Kalibrationskurve eine gerade Linie ist, die durch den Koordinatenpunkt (M_{I}, M_{g}) hindurchtritt, der bestimmt ist durch den Mittelwert (M_{I}) der Strahlungsintensität des Mittelwerts des Flächengewichts oder der Dicke (M_{g}), wobei die gerade Linie einen Winkelkoeffizient hat, der bestimmt ist durch das Verhältnis (σ_{g}/σ_{I}) der Varianz (σ_{g}) des Flächengewichts oder der Dicke und der Varianz (σ_{I}) der Intensität.

## Revendications

1. Équipement pour mesurer, en continu et sans contact direct, le profil de poids surfacique ou d'épaisseur d'un matériau en film ou en ruban, pendant que ledit matériau se déplace, l'équipement comprenant :
des dispositifs d'irradiation (2) capables d'irradier une région sur ledit matériau dans un plan (P) compris entre deux lignes droites parallèles (r₁, r₂),
des dispositifs de mesure (3) capables de mesurer de façon cyclique l'intensité du rayonnement transmis à travers des surfaces de base (a₁, a₂, a₃, ..., aₙ) de ladite région dans ledit plan (P) compris entre lesdites deux lignes droites parallèles (r₁, r₂), dans lequel lesdites surfaces de base (a₁, a₂, a₃, ..., aₙ) sont géométriquement alignées parallèlement auxdites deux lignes droites parallèles (r₁, r₂), lesdits dispositifs de mesure (3) étant constitués d'une télécaméra linéaire (3) ou d'une caméra matricielle,
dans lequel lesdits dispositifs d'irradiation (2) et lesdits dispositifs de mesure (3) sont agencés de manière à définir un espace capable de permettre le déplacement, dans ladite région dudit plan compris entre lesdites deux lignes droites parallèles, dudit matériau dans une direction perpendiculaire à celle des deux lignes droites parallèles (r₁, r₂), de telle sorte que l'intensité du rayonnement transmis à travers chaque surface de base individuelle (aᵢ) soit fonction du poids surfacique ou de l'épaisseur du matériau,
des dispositifs (4) capables de traiter le signal de l'intensité de rayonnement mesurée de façon cyclique pour chaque surface de base individuelle (aᵢ) de manière à obtenir des informations représentatives du poids surfacique ou de l'épaisseur du matériau qui traverse chaque surface de base individuelle (aᵢ),
des dispositifs de calibrage (6) capables de définir une courbe de calibrage mettant en corrélation la mesure de l'intensité de rayonnement mesurée dans chaque surface de base individuelle (aᵢ) et une valeur de poids surfacique ou d'épaisseur,
lesdits dispositifs de calibrage (6) comprenant une tête d'analyse (7) capable de s'aligner géométriquement, en fonction de la direction de déplacement du matériau, avec chaque surface de base individuelle (aᵢ), et de réaliser une séquence de mesures du poids surfacique ou de l'épaisseur sur la longueur de matériau préalablement soumise à la mesure de l'intensité de rayonnement,
**caractérisé en ce que** lesdits dispositifs de calibrage (6) sont capables de calculer la moyenne (M_{I}) et la variance (σ_{I}) des valeurs de l'intensité du rayonnement, calculer la moyenne (M_{g}) et la variance (σ_{g}) des valeurs de poids surfacique ou d'épaisseur, et capable d'obtenir la courbe de calibrage en fonction desdites moyennes (M_{I}, M_{g}) et desdites variances (σ_{I}, σ_{g}).

2. Procédé pour la mesure continue et sans contact du profil de poids surfacique ou d'épaisseur d'un matériau en film ou en ruban, en particulier d'un tissu non tissé, pendant que ledit matériau se déplace, le procédé comprenant les étapes consistant à :
irradier une région sur ledit matériau dans un plan (P) compris entre deux lignes droites parallèles (r₁, r₂) perpendiculaires à la direction de déplacement du matériau,
mesurer de façon cyclique l'intensité du rayonnement transmis à travers des surfaces de base (a₁, a₂, a₃, ..., aₙ) de ladite région dans ledit plan (P) alignées parallèlement auxdites deux lignes droites parallèles (r₁, r₂),
traiter les informations sur l'intensité du rayonnement transmis de chaque surface de base individuelle (aᵢ) et obtenir des informations représentatives du poids surfacique ou de l'épaisseur pour chaque surface de base individuelle (aᵢ) en fonction d'une courbe de calibrage de chaque surface de base individuelle (aᵢ),
dans laquelle la reconstitution de la courbe de calibrage de chaque surface de base individuelle (aᵢ) comprend les étapes consistant à :
faire s'aligner géométriquement une tête d'analyse (7), en fonction de la direction de déplacement du matériau, avec chaque surface de base individuelle (aᵢ), réaliser une séquence de mesures pour chaque surface de base individuelle (aᵢ) pendant une durée (T) ne dépassant pas celle nécessaire au matériau pour avancer d'une longueur égale à la distance entre la surface de base individuelle (aᵢ) et la surface de lecture de la tête d'analyse (7), et effectuer avec la tête d'analyse (7) une séquence de mesures du poids surfacique ou de l'épaisseur sur la longueur de matériau préalablement soumise à la mesure de l'intensité de rayonnement,
**caractérisé en ce que** la reconstitution de la courbe de calibrage comprend en outre les étapes consistant à :
calculer la moyenne (M_{I}) et la variance (σ_{I}) des valeurs de l'intensité du rayonnement, calculer la moyenne (M_{g}) et la variance (σ_{g}) des valeurs de poids surfacique ou d'épaisseur, et établir la courbe de calibrage en fonction desdites moyennes (M_{I}, M_{g}) et desdites variances (σ_{I}, σ_{g}).

3. Procédé selon la revendication 2, **caractérisé en ce que** ladite courbe de calibrage est une ligne droite passant par le point de coordonnées (M_{I}, M_{g}) définies par la moyenne (M_{I}) de l'intensité de rayonnement et la moyenne de poids surfacique ou d'épaisseur (M_{g}), la ligne droite ayant un coefficient angulaire défini par le rapport (σ_{g}/σ_{I}) de la variance (σ_{g}) du poids surfacique ou de l'épaisseur à la variance (σ_{I}) de l'intensité.
